# EUROPEAN PATENT SPECIFICATION

(11) **EP 1 980 475 B1**
(45) Date of publication and mention of the grant of the patent: **02.06.2010**
(21) Application number: 07106193.1
(22) Date of filing: 13.04.2007
(51) Int. Cl.: B62H 3/08, B62H 3/12

(54) **Two-level bicycle storage system**
Zweistufiges Fahrradabstellsystem
Système de stockage de bicyclettes à deux niveaux

(43) Date of publication of application: 15.10.2008
(73) Proprietor: Klaver Bik(e) Motion B.V., 7903 BD Hoogeveen (NL)
(72) Inventor: Westphal, Christiaan, 9402 WB Assen (NL)
(74) Representative: van Loon, C.J.J.

(56) References cited:
- EP-A- 0 939 025

## Description

### TECHNICAL FIELD AND BACKGROUND ART

The invention relates to a two-level bicycle storage system for storing bicycles at a first level and at a second level above the first level according to the preamble of claim 1.

To enable the storage of multiple bicycles on a small area, the storage system comprises multiple holders along the first, lower level, and the second, upper level. In this document a first level holder is also referred to as a "lower holder", and a second level holder is also referred to as an "upper holder".

Such a bicycle storage system is for example known from EP 0 939 025 which discloses all the features of the preamble of claim 1. The first level holders are fixed in a position such that a bicycle can be driven directly on to it. The second level holders are moveable between a storing position for storing a bicycle and a loading position, with one end lowered, for loading the bicycle on or off the holder. Thus, a user does not have to lift his bicycle up to the second level, but can use the holder for lifting the bicycle into the upper level storing position.

In the bicycle storage system known from EP 0 939 025, an upper level holder consists of a U-shaped holder profile, telescopically supported via a guiding rail in a housing formed by a U-shaped housing profile. The housing profile is supported by a frame. The holder profile has a loading end provided with a grip. For loading or unloading a bicycle on or off the holder, the user pulls the grip and slides the holder profile from the storing position into the loading position. While the holder profile slides into the loading position, it pivots with its loading end in a downward direction.

The guides for movably connecting the holder profile with the housing profile extend between the two profiles. The guides are formed by rails along the lateral sides of the holder profile and flanges along the open topside of the housing profile, engaged by guiding rolls connected with the housing profile and the holding profile respectively.

A drawback of the known bicycle storage system is that the use of cradled U-shaped profiles for the holder and the housing limits the freedom of design, for example in relation to the forms possible for the holder, or the possible positions of the holder in relation to the housing when in the storing position.

A further drawback of the known bicycle storage system is that the housing profile is open along its topside. Especially when the holder is in the loading position, the guides are exposed. Thus, the guide surfaces can easily get dirty, increasing the power needed to move the holder, or even blocking any movement. Also, objects such as leaves, or for example a bolt or other small part disengaged from a bicycle, can easily end up in the housing profile, blocking the sliding movement of the holder profile. Thus, the guides are offered little protection against the elements or blocking of the guiding system by foreign objects.

### SUMMARY OF THE INVENTION

It is an object of the present invention to provide a new bicycle storage system that enables an increased freedom for designing the position and/or the form of the upper holder.

According to the present invention, this object is achieved by providing a two-level bicycle storage system according to claim 1. A storage system according to the invention comprises a guiding system with a support arm for guiding an upper holder between a storing position and a loading position. The support arm is supportingly connected with the holder such that the holder is adjacent the housing of the guiding system in the storing position. Since the upper holder is positioned adjacent the housing, it can be positioned lateral to and/or above the housing of the guiding system, or lateral to and below the housing of the guiding system.

Furthermore, the holder can be for example of a curved shape in its longitudinal direction, or can for example be provided with one or two slots for engaging a wheel or the wheels of a bicycle, preventing the bicycle from rolling of the holder when for example in the storing position.

Also, when in the storing position, the holder can be at an angle, with one end lower than the opposite end, with the housing of the guiding system. Thus, the bicycle can be stored with the handlebars level with the luggage carrier, enabling storage under a relatively low roof or ceiling.

Also, by separating the holder and the guiding system, the dirt of bicycle wheels and disengaging bicycle parts do not easily end up in the guiding system.

Thus, the freedom for designing a storage system, in particular for designing the position and/or the form of the upper holder is increased.

Furthermore, because the holder is adjacent the guiding system, this gives more space for the usage of bigger guiding wheels, thus making the movement of the support arm and the holder more smoothly and reliable. Still the guiding system is of limited dimensions, thus keeping the nature of the system compact.

Furthermore, since the guiding system supports the holder adjacent the housing, the housing does not enclose the holder, and, in a specific embodiment according to the invention, the housing may at least be partially closed along its topside. Thus, the guiding surfaces inside the housing are sheltered from the elements and foreign objects, even when the holder is in the loading position.

Also, by at least partially closing the housing along its topside for enclosing the guiding system, elements of the guiding system such as gas springs can be protected against theft or vandalism.

A storage system according to the invention also offers stable and orderly placement of a bicycle, and an integrated protection for bicycles against theft both in public and semi-public places. Particular embodiments of the invention are set forth in the dependent claims.

Further aspects, effects and details of the invention are set forth in the detailed description with reference to examples of which some are shown in the schematic drawings.

### BRIEF DESCRIPTION OF THE DRAWINGS

Fig 1 shows a side view of an example of an embodiment of a two-level bicycle storage system according to the invention;
Fig 2 shows a top view of part of the bicycle storage system of Fig.1 in the storing position,
Fig. 3 shows a side view in section of part of the bicycle storage system of Fig.1 in the storing position;
Fig. 4 shows a side view in section of part of the bicycle storage system of Fig.1 in the loading position; and
Fig. 5 shows a view in cross section of part of the bicycle storage system of Fig.1 in the storing position, indicated with the line VV in said Fig.1.

### MODES FOR CARRYING OUT THE INVENTION

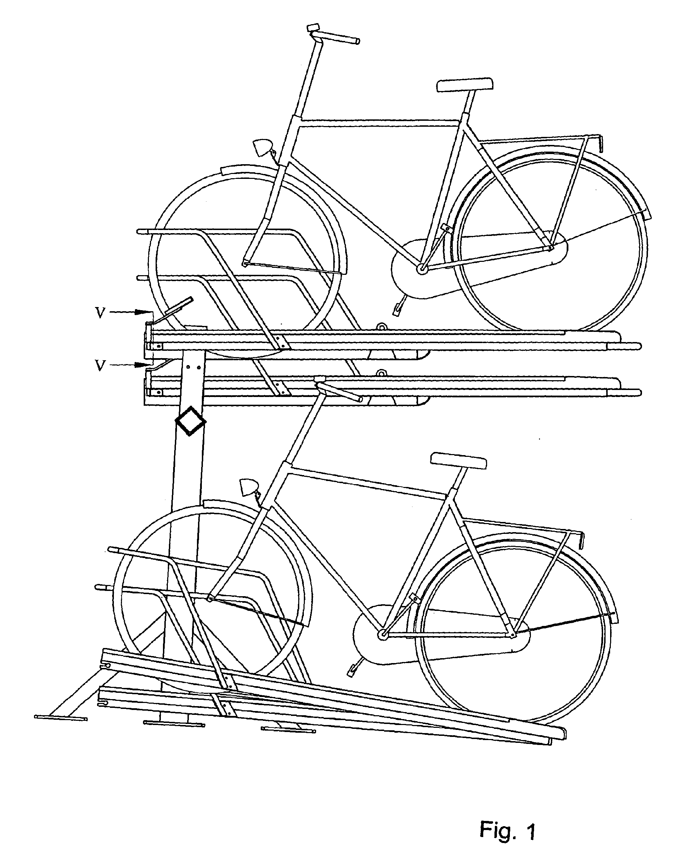

A two-level bicycle storage system according to the invention is shown in Fig.1. In the system shown a first bicycle is stored in a holder at a first level and second bicycle is stored in a holder at a second level above the first level. The system may comprise multiple holders at the first and second level for storing multiple bicycles. The height of a level is the average of the height at which the holders of that level are positioned when in the storing position. For example, when half the upper level holders are positioned at a height of 1.05 m, and half at a height of 1,35 m, the height of the level is 1,2 m. Thus, the height of the holders may deviate from the height of the level.

The two-level storing system according to the invention will hereafter be explained in more detail.

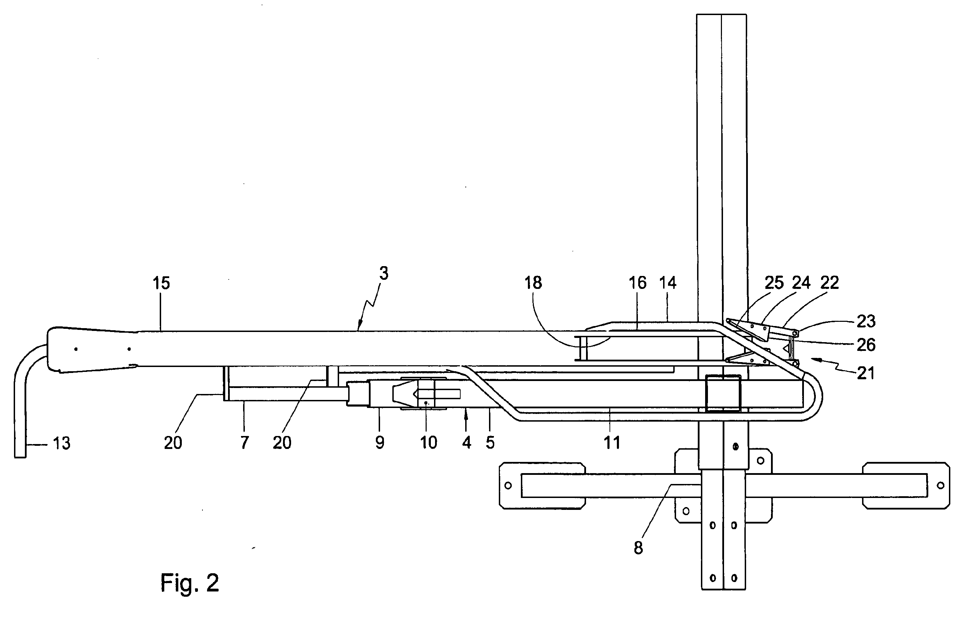

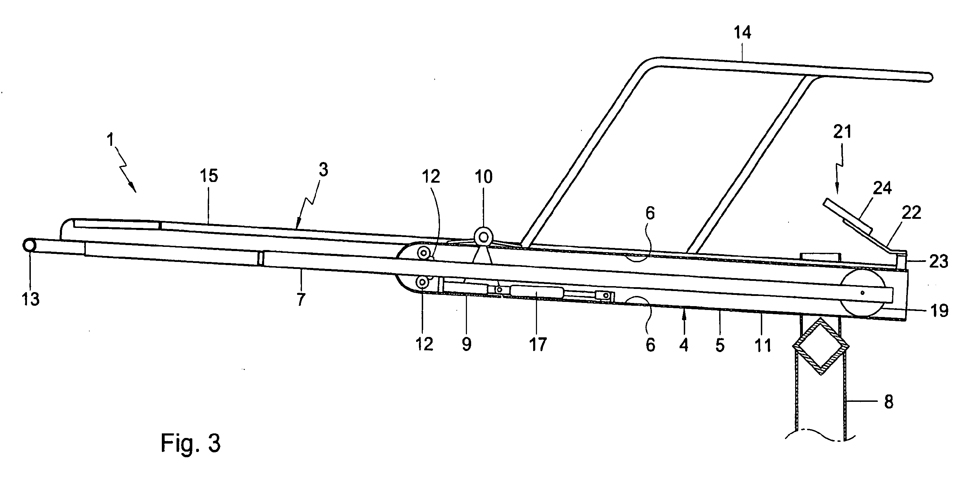

Fig. 2 and Fig. 3 show a top view and a side view, respectively, of part of the two-level bicycle storage system 1 shown in Fig. 1. In the storing position shown the upper holder 3 is positioned adjacent a housing 5 of a guiding system 4 supported by a frame 8.

The upper holder 3 has loading end 15 and a holding end 16, the first is provided with a grip 13 and the second is provided with a support frame 14 and a holding slot 18. A bicycle placed on the holder 3 is positioned with its steering wheel in the holding slot 18, such that the wheel partially extends below the holder. Thus the bicycle is prevented from rolling off the support 3 by accident, which is especially important when the holder 3 is in the loading position.

Furthermore, when the upper holder 3 is in the storing position, due to the lowered position of the steering wheel and therefore the handlebar of the bicycle, the minimum height needed for storing the bicycle in the storing position is reduced. Thus, the minimum height between a floor and a ceiling needed for placing a system according to the invention for example inside a building or under a roof is reduced. In an alternative embodiment, the holder may for example be curved in its longitudinal direction for supporting the steering wheel in a lower position than the other wheel of the bicycle, when stored in the storing position.

The upper holder 3 is provided with a support frame 14 for preventing a bicycle from being driven past the holding slot 18 when being loaded onto the holder 3 and for supporting a bicycle when on the holder, in a lateral direction. As can be seen in the top view shown in Fig. 2, the support frame 14 is positioned in a lateral direction closely along the support at one side and at some distance along the opposite side of the holder. When a bicycle wheel is inserted in the support frame 14 the wheel, and therefore the bicycle, is inclined by the part of the support frame 14 close to the holder 3 towards the part of the support frame 14 at some distance from the holder 3. Thus, the bicycle is supported by the support frame 14 at a slight angle with a vertical, upright position. Supporting the bicycle at a slight angle is more stable than supporting a bicycle in an upright position.

Furthermore, since the support frame 14 supports the bicycle on one side only, bicycles of various dimension can be supported, which would not be possible if the support frame or the holding slot would need to fit a bicycle wheel or part of the bicycle frame to stabilize the bicycle on the holder.

Also, the support frame allows maneuvering the bicycle to both sides by hand. Thus it is possible to maneuver the bicycle between the extending parts, such as the handlebars, of bicycles placed in the adjacent holders, and to get the bicycle out of, and in to the storing position without hindering other bicycles placed in the storage system.

Also, by storing multiple bicycles next to each other in the same position, for example inclined to the right, the overall impression of the stored bicycles will be more organized than when at random some bicycles are inclined to the right, and others are inclined to the left in their storing position.

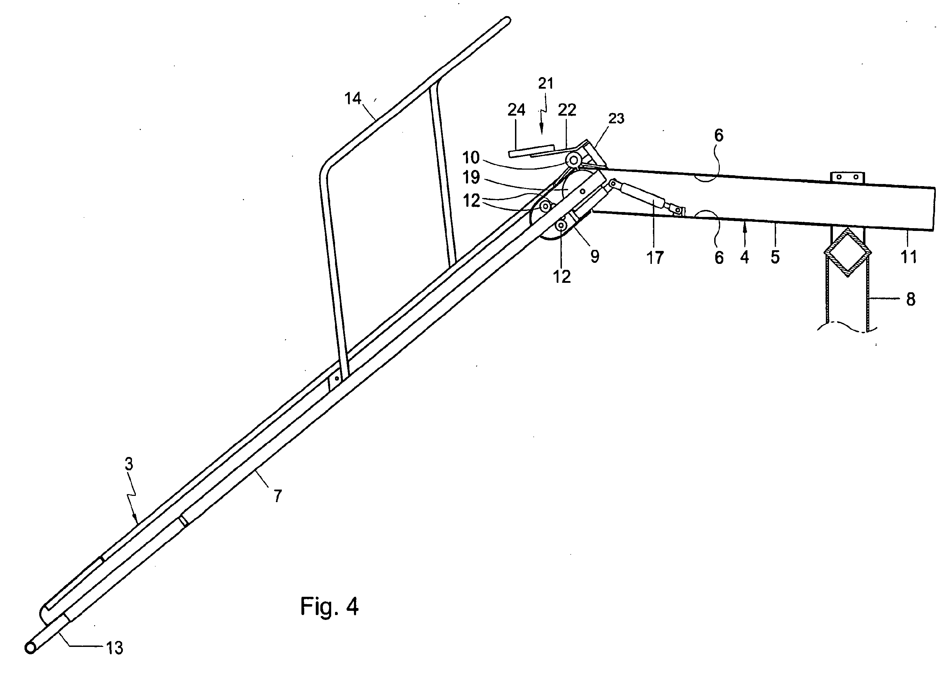

For movement between the storing position, shown in Fig. 2 and Fig 3, and the loading position, shown in Fig. 4, the upper holder 3 is supported by the guiding system 4. The guiding system 4 comprises the housing 5 and a guide 6 for supportingly guiding the upper holder 3. The guiding system 4 further comprises a support arm 7 moveably supported in the housing 5 by the guide 6, and supportingly connected with the holder 3 such that the holder is adjacent the housing 5 of the guiding system when in the storing position.

In the embodiment shown, the holder 3 is positioned not only adjacent the housing 5, but also in a lateral position to, and at equal height with, the housing 5 of the guiding system 4. In an alternative embodiment, the support arm can be connected with the holder for supporting it in a lateral position above or below the housing of the guiding system, or above the housing of the guiding system, when in the storing position.

When a bicycle storage system comprises multiple holders at one level, adjacent holders on that level preferably store bicycles at different heights. Thus, the holders can be placed close together without the handlebars of the bicycles interlocking with one another. For example, half of the upper holders may be supported at 1,05 m when in the storing position, and half of the upper holder may be supported at a height of 1,35 m when in the storing position. In known storage systems, the frame holding the guiding system should be adapted to support the guiding systems at different heights. A frame of a storage system according to the invention may however support the guiding systems all at the same height, since the position of the holders relative to the guiding system can be varied. This is advantageous since differentiating in support arms for supporting holders is relatively simple compared to differentiating in frames for holding the guiding systems.

Furthermore, the support arm can be connected with the holder such that the holder when in the storing position is positioned with its holding end in a lower position than the loading end or visa versa. Thus the freedom for designing an optimal storage system for a particular situation is increased.

Since the holder is positioned adjacent the housing and is not partially enclosed by the housing, the housing may at least be partially closed along its topside for protecting parts of the guiding system, when the holder is in the loading position. In the embodiment shown, the housing is closed along its topside and the only openings in the housing are for guiding the support arm 7, and, in the storing position, an opening at the downside of the housing, where the pivotable part and the housing come together. The latter opening can be provided with a cover, and the first opening is closed by engaging the support arm. Thus the guiding system inside the housing can be fully protected from the environment, vandalism, etc.

Alternatively, sides of the housing may be provided with openings for example for providing an entrance to tools for adjusting the guiding mechanism, or to give extra support for support arm 7. In a further alternative embodiment, the housing could also be provided with for example a slot in its topside extending in its longitudinal direction for allowing a holder positioned above the housing when in the storing position, to be connected to parts of the support arm positioned in the housing when in the loading position. Such a housing could still be considered substantially closed along its topside, since it protects the elements of the guiding system against the rain, theft, foreign objects blocking the movement of the support arm in the guide, etc.

In the preferred embodiment shown, the holder 3 is connected to the support arm 7 via two arms 20. The two arms 20 create an opening for securing a bicycle lock, such as for example a U-lock, a chain lock or a cable lock. Thus the holder can easily be used for securing the bicycle with a bicycle lock against theft. In an alternative embodiment, the support arm, or holder could for example also have a ring or bracket attached to it, or be provided with an opening for attaching a bicycle lock.

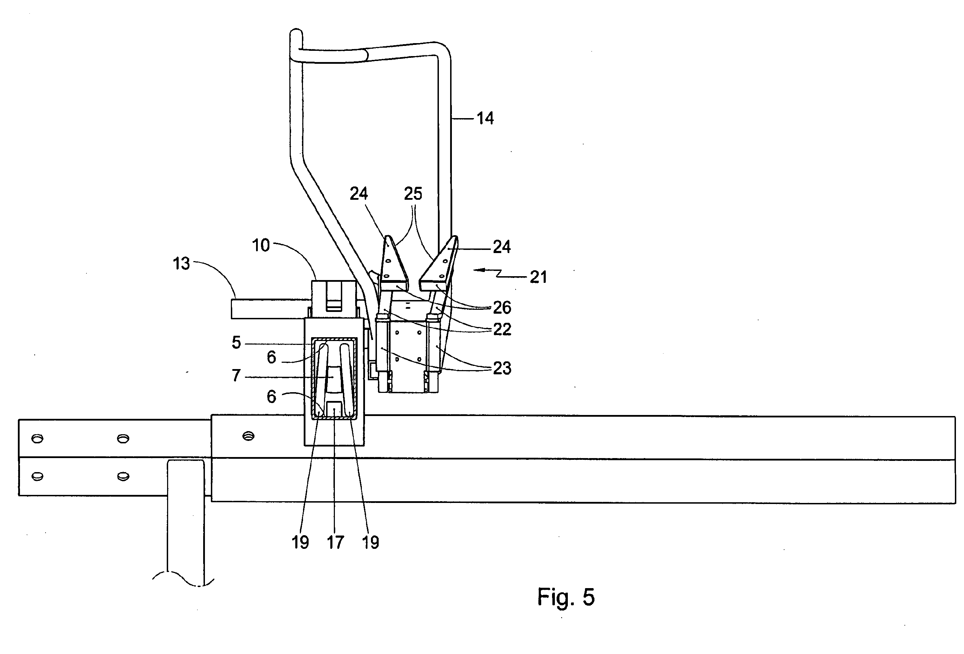

The support arm 7 is at the end which is supported inside the housing 5 provided with two guiding wheels 19 each suspended at a lateral side, as is shown in Fig. 5. The rotational axes of the wheels 19 are at an angle relative to one another, such that the wheels are at their topsides closer together than at their downsides, as is shown in Fig. 5. The inside of the housing 5 forms the guide 6 for guiding the support arm 7 via the guiding wheels 19. The positioning of the holder adjacent the guiding system creates more space inside the housing enabling the usage of bigger guiding wheels. Thus, the movement of the support arm and the holder are smooth and reliable while the guiding system is still of limited dimensions, keeping the nature of the system compact.

The two wheels 19 are able to support a moment enacted upon the support arm 7 by the holder 3 in a plane perpendicular to the longitudinal axes of the support arm. The moment is caused by the weight of the holder 3, and optional a bicycle upon that holder, in combination with the lateral position of the holder 3 relative to the housing 5.

The wheels 19 extend between the upper and the lower surface of the inside of the housing 5, however, they do not touch both sides at the same time since that would prevent them from rolling along one of the two surfaces. The guiding wheel closest to the holder 3 is guided by the bottom inner surface 6 of the housing 5, while the wheel on the opposite side of the arm 7 is guided by the top inner surface 6 of the housing 5. Thus, the wheels can support the moment enacted upon the support arm, which moment would rotate the arm with respect to its longitudinal axis when it would not be supported by the wheels

When the moment on the arm 7 changes direction, for example in a configuration with the holder positioned at the opposite lateral side of the housing, the arm is rotated over a small angle and the wheel which was resting upon the lower surface of the housing is pressed against the upper surface of the housing and visa versa.

By placing the wheels 19 at an angle with one another, it is prevented that the sides of the wheels 19 facing away from the arm 7, are forced against the sidewalls of the hosing 5 by the moment, increasing friction and slowing down the movement of the arm 7.

In the embodiment shown, the housing 5 has a tubular shape with a rectangular cross section. The guide 4 is formed by the inside surfaces of the housing 5. Thus the housing is of a simple shape, and no separate guide is needed. Therefore the guiding system is very robust. The housing is furthermore closed along its topside, thus protecting the elements of the guiding system against the rain, theft, foreign objects blocking the movement of the support arm in the guide, etc.

In a preferred embodiment, a guiding wheel engages the housing in grooves in the walls of the housing, for example formed by the sidewalls and the bottom wall coming together as is shown in Fig. 5, for guiding the wheels.

The housing 5 comprises a fixed section 11 connected via a hinge 10 with a pivotable end section 9 for pivotably supporting the support arm 7. At the pivotable end section 9 the support arm 7 is supported by rotateably mounted rollers 12 along the four sides of the arm 7. Thus the support arm 7 is slideable supported in the housing 5 and can be moved from an inserted position into an extend position relative to the housing. Furthermore, the use of rollers in combination with the rectangular cross section of the support arm, enables the rollers supporting the moment enacted by the holder upon the support arm. Furthermore, the holder 3 can be pivoted in a loading position with its loading end in a lowered position to enable the loading of a bicycle, as is shown in Fig. 4.

A Resilient body in the form of a gas spring 17 is located in the housing 5, and is at one end pivotably connected with the pivotable end section 9 of the housing 5 and is at the opposite end pivotably connected with the fixed section 11 of the housing 5. The gas spring 17 supports the pivotable end section 9 in a horizontal position when the support arm 7 is in the storing position. When the support arm is pivoted between the holding position and the storing position, the gas spring is compressed and the spring force counter balances at least part of the weight of the holder 3 for facilitating lifting of the holder 3 into the storing position.

In an alternative embodiment, instead of, or in addition to, a gas spring a spiral spring, a leaf spring, etc, or for example an electric drive could be used for manipulating the pivotable end section.

In the preferred embodiment shown, the points of attachment of the gas spring 17 and the hinge point 10 are positioned such that when the holder 3 is in the loading position, the points of attachment of the spring and the hinge point of the pivotable section 9 are in line with one another. Thus the work line of the force enacted by the gas spring 17 upon the pivotable section 9 intersects the pivot point of the hinge 10, and therefore no moment is enacted upon the end section 9 by the gas spring when the holder 3 is in the loading position. Thus, the loading position is a neutral or stable position, and there is nor risk of for example the support 3 slapping against a person lifting a bicycle of the holder.

Preferably, the point of attachment of the spring 17 to the pivotable end section 9 is adjustable in a direction parallel to the guiding arm 7. Thus the loading position of the holder 3 can be adjusted to the height at which the guiding system is mounted to the frame.

For example, by moving the point of attachment towards the end of the pivotable end section supporting the arm 7, the end section needs to pivot over a larger angle before is in the stable loading position, and the loading end 15 of the holder 3 moves over a greater distance in the downward direction. Thus, the guiding system 4 can be mounted to the frame 8 at a larger height or the holder 3 can be positioned at a larger height relative to the guiding system when in the loading position.

For storing a bicycle in the upper holder, a user pulls the grip 13 and slides the holder from the storing position into the loading position. The guiding wheels 19 slide along the guiding surface 6 inside the housing 5 from the far end in the direction to the pivotable end section 9. While the support arm is moved out of the housing 5, the weight carried by the pivotable end section 9 increases. Under this weight, the pivotable section 9 pivots around the hinge 10, compressing the gas spring 17, and the loading end 15 of the holder 3 lowers in a downward direction. Thus the gas spring counter balances part of the weight of the support 3 and the support arm 7, preventing the holder from falling into the loading position.

In the loading position the loading end 15 of the holder 3 is close to the floor surface, such that the user can easily load the bicycle onto the holder. The front wheel of the bicycle to be loaded upon the holder is driven from the loading end 15 towards the holding end 16 of the holder 3, and into the holding slot 18. The bicycle is tilted in a position inclined to the right, against the support frame 14.

Subsequently the user uses the grip 13 to lift the holder 3 back into the storing position. When the holder 3 is lifted out of the loading position, the gas spring 17 again enacts a force upon the pivotable end section 9 of the housing creating a moment for at least partially counterbalancing the weight of the support arm, holder and bicycle, and facilitating the lifting of the bicycle into the storing position.

In a preferred embodiment, the holder 3 is provided with a catcher 21 for holding part of a bicycle relative to the holder 3. The catcher is place at the end of the holder 3 for engaging part of a wheel of the bicycle.

The catcher 21, as can be seen in Fig. 5, comprises two parallel arms 22. Parallel to one another, the arms 22 are in a holding position, at such a distance from one another that they can hold part of a wheel or part of a frame of a bicycle in-between them.

At one end each arm 22 is pivotably supported for pivoting away from one another, out of the holding position into an engaging position. Both pivots 23 are provided with a coil spring for resiliently forcing the arms 22 into the holding position. At the opposite end each arm 22 extends towards the other arm to form a hook 24 for hooking behind part of a frame or wheel that is moved in-between the arms 22 of the catcher 21.

The extending parts forming the hooks 24 have a triangular shape. The base of the triangular shaped extension extends parallel to the arms 22 and the point of the triangular shaped extension points towards the other arm. Thus the sides of the triangular shaped extension extend in a plane defined by the two arms 22, with an outward side 25 facing away from the pivots 23, an inward facing side 26 facing towards the pivots 23.

The catcher 21 is positioned such that when a bicycle is loaded upon the holder 3, part of a wheel is moved into the catcher. The wheel slides along the outward sides 25 of the triangular shaped hooks 24 which force the arms 22 to pivot from the holding position into the engaging position. Since the arms 22 are resiliently forced into the holding position, extra force is needed to push the wheel into the catcher 21 and move the arms 22 into the engaging position.

When the wheel has past the top of the triangular hooks 24, the arms 22 pivot back into their holding position. In the holding position, the arms 22 are now hooked with the inward facing sides 26 of the hooks 24 around the wheel. Since the arms 22 are resiliently forced into the holding position, an extra force is needed again to pull the wheel out of the catcher and move the arms into the engaging position for releasing the wheel, preventing the bicycle from simply sliding out of the catcher and of the holder 3.

In the preferred embodiment shown, the hooks 24 of the catcher 21 are triangular shaped, with the outward sides 25 of the triangle and the base of the triangle defining a first angle, and the inward side 26 of the triangle and the base of the triangle defining a second angle, and wherein the first angle is smaller than the second angle. Thus it is relatively easy to insert for example part of a wheel into the catcher 21, while it takes an extra effort to pull the wheel out again, preventing the bicycle from sliding out of the catcher 21 by accident. Furthermore, the catcher is compact and therefore does not interfere with storing bicycles closely together.

In an alternative embodiment the arms can be formed out of a U-shaped profile made of a resilient material such as a plastic, or the arms and hooks can for example be bent out of a metal wire or profile. Thus the catcher can be made out of one piece, and/or, by using a resilient material, use of a spring and pivot can be avoided, which is cost effective. In a preferred embodiment, the hooks are made from a plastic or are provided with a plastic cover and/or have rounded edges to prevent them from damaging a body when moved into or out off the catcher.

In the embodiment shown, the catcher 21 is mounted at the end of the second-level holder 3 for engaging part of a wheel of a bicycle placed upon the holder. In an alternative embodiment, a catcher can also be applied in combination with a holder without a guiding system, and may for example be mounted on the first-level holder 2 for engaging part of a wheel of a bicycle placed upon the first level holder 2.

Furthermore, the supporting frame of the bicycle storage system supporting the second-level may be adapted, for mounting a catcher for engaging part of the frame of a bicycle placed in the storing position, such as part of the handlebar. Thus the catcher enables the design of the bicycle storage system to be adapted, and enhances the freedom of design.

From the foregoing, it will be clear to the skilled person, that within the framework of invention as set forth in the claims also many variations other than the examples described above are conceivable. For instance, the support arm can also be guided by rollers, by sliding block(s), ball bearings mounted either upon the arm or on the guide. Also, the support arm could be provided on each corner with a small wheel, the four wheels being guided the corners of the housing.

Also, the cross section of the support arm and/or housing could have a circular, triangular, or any other shape. The support arm may for example also be formed by using a T-profile, an L-profile, etc.

Furthermore, the support arm and or the housing could be at least partially curved in the longitudinal direction. Thus the end of the support arm would move along an arched path when moved from the inserted to the extended position, lowering the end point by sliding the arm out of the housing. In this way, the angle over which the pivotable end section of the housing should be pivoted for bringing the holder in the loading position could be reduced, or the pivotable end section could even be omitted.

In a further embodiment, the support arm could be provided with a hinge near the end of the arm guided inside the housing. When the arm is drawn into its extended position, the part of the arm connected with the holder could thus pivot relative to the part supported in the housing for lowering the holder in the loading position. Thus, the angle over which the pivotable end section of the housing should be moved could be reduced, or the pivotable end section could even be omitted.

Instead of the inside of the housing forming a guiding surface for guiding the support arm, for example guides or rails can be used. Such an embodiment can be designed such that the end section of the guide is pivotably connected within the housing. Thus, the angle over which the pivotable end section of the housing should be pivoted could be minimized, or a pivotable end section could even be omitted.

Furthermore, the relative position of the holders at one level may alter in a vertical direction such that two bicycles stored in adjacent holders at one level are at a different height, and the handlebars may overlap. Thus the holders can be positioned closer together than when the where positioned at equal height, and more bicycles can be stored per meter. Alternatively, only the fronts of the holders may alter in height to enable the overlapping of handlebars.

Typically, the bicycles are placed on the holders with their front facing away from loading end of the holder and the user parking the bicycles. In an alternative embodiment bicycles may also be positioned with the steering wheel in the direction of the loading end of the holder.

## Claims

1. A two-level bicycle storage system (1) for storing bicycles at a first level and at a second level above the first level, comprising:
at least one first level holder (2) for holding a first bicycle, and for storing said bicycle on the first level;
at least one second level holder (3) for holding a second bicycle, and for storing said bicycle on the second level;
a guiding system (4), comprising a housing (5) and at least one guide (6), for supportingly guiding the second level holder (3) between a storing position for storing the bicycle and a loading position for loading and unloading the bicycle on or off the second level holder (3); and
a frame (8) for supporting the guiding system (4);
**characterized in that**
the guiding system (4) further comprises a support arm (7) moveably supported in the housing (5) by the guide (6), and supportingly connected with the second level holder (3) such that the holder (3) is adjacent, in the sense of not being enclosed by, the housing (5) of the guiding system (4) when in the storing position.

2. A bicycle storage system according to claim 1, wherein the housing (5) is at least partially closed along its topside for protecting parts of the guiding system (4), when the holder (3) is in the loading position.

3. A bicycle storage system according to claim 1 or 2, wherein the housing (5) has a tubular shape with a rectangular cross section.

4. A bicycle storage system according to any one of the previous claims, wherein the inside of the housing (5) forms a guiding surface for guiding the support arm (7).

5. A bicycle storage system according claim 4, wherein the support arm (7) is provided with at least two guiding wheels (19) each suspended at a lateral side of the support arm (7), and wherein the rotational axes of the wheels (19) are at an angle relative to one another, such that the wheels (19) are at their topsides closer together than they are at their than downsides.

6. A bicycle storage system according to any one of the previous claims, wherein the support arm (7) is pivotable into a position with one end lowered for supporting the holder (3) in the loading position.

7. A bicycle storage system according to any one of the previous claims comprising a resilient body (17) for counterbalancing the weight of the holder (3) in the loading position.

8. A bicycle storage system according to claim 7, wherein the resilient body (17) is positioned inside the housing (5) of the guiding system (4).

9. A bicycle storage system according to claim 7 or 8, wherein the resilient body (17) is a spring, preferably a gas spring.

10. A bicycle storage system according to any one of the previous claims, wherein the housing (5) comprises a fixed section (11) connected via a hinge (10) with a pivotable end section (9) for pivotably supporting the support arm (7).

11. A bicycle support system according to claims 9 and 10, wherein the spring (17) is at one end pivotably connected with the pivotable end section (9) of the housing (5) and at its opposite end is pivotably connected with the fixed section (11) of the housing (5), such that when the holder (3) is positioned in the loading position, the points of attachment of the spring (17) and the pivot point of the pivotable end section (9) are in line with each other.

12. A bicycle storage system according to any one of the previous claims, wherein the holder (3) is positioned parallel to the housing (5) of the guiding system (4) when in the storing position.

13. A bicycle storage system according to any one of the previous claims, wherein the holder (3) is positioned lateral to the housing (5) of the guiding system (4) when in the storing position.

14. A bicycle storage system according to claim 13, wherein the holder (3) is positioned lower than the housing (5) of the guiding system (4) when in the storing position.

## Patentansprüche

1. Zwei Ebenen umfassendes Fahrradabstellsystem (1) zum Abstellen von Fahrrädern auf einer ersten Ebene und auf einer zweiten Ebene oberhalb der ersten Ebene, umfassend:
mindestens einen Halter (2) auf erster Ebene zum Halten eines ersten Fahrrads und zum Abstellen des Fahrrads auf der ersten Ebene;
mindestens einen Halter (3) auf zweiter Ebene zum Halten eines zweiten Fahrrads und zum Abstellen des Fahrrads auf der zweiten Ebene;
ein Führungssystem (4), das ein Gehäuse (5) und mindestens eine Führung (6) aufweist, um den Halter (3) auf zweiter Ebene zwischen einer Abstellposition zum Abstellen des Fahrrads und einer Ladeposition zum Einladen und Ausladen des Fahrrads in den oder aus dem Halter (3) der zweiten Ebene tragend zu führen; und
einen Rahmen (8) zum Tragen des Führungssystems (4);
durch **gekennzeichnet**, dass
das Führungssystem (4) ferner einen Tragarm (7) aufweist, der mittels der Führung (6) bewegbar in dem Gehäuse (5) gehalten ist und tragend mit dem Halter (3) der zweiten Ebene verbunden ist, derart dass der Halter (3) angrenzend, im Sinne von nicht umschlossen durch, an das Gehäuse (5) des Führungssystems (4) ist, wenn in der Abstellposition befindlich.

2. Fahrradabstellsystem nach Anspruch 1, wobei das Gehäuse (5) entlang seiner Oberseite zumindest teilweise geschlossen ist, um Teile des Führungssystems (4) zu schützen, wenn der Halter (3) in der Ladeposition ist.

3. Fahrradabstellsystem nach Anspruch 1 oder 2, wobei das Gehäuse (5) eine Röhrenform mit einem rechteckigen Querschnitt hat.

4. Fahrradabstellsystem nach einem der vorhergehenden Ansprüche, wobei die Innenseite des Gehäuses (5) eine Führungsfläche zum Führen des Tragarms (7) bildet.

5. Fahrradabstellsystem nach Anspruch 4, wobei der Tragarm (7) mit mindestens zwei Führungsrädern (19) versehen ist, die jeweils an einer lateralen Seite des Tragarms (7) aufgehängt sind, und wobei sich die Rotationsachsen der Räder (19) in einem Winkel relativ zueinander befinden, so dass die Räder (19) an ihren Oberseiten näher als an ihren Unterseiten zusammen sind.

6. Fahrradabstellsystem nach einem der vorhergehenden Ansprüche, wobei der Tragarm (7) in eine Position schwenkbar ist, in der ein Ende abgesenkt ist, um den Halter (3) in der Ladeposition zu halten.

7. Fahrradabstellsystem nach einem der vorhergehenden Ansprüche, das einen elastischen Körper (17) als Gegengewicht zum Gewicht des Halters (3) in der Ladeposition aufweist.

8. Fahrradabstellsystem nach Anspruch 7, wobei der elastische Körper (17) innerhalb des Gehäuses (5) des Führungssystems (4) positioniert ist.

9. Fahrradabstellsystem nach Anspruch 7 oder 8, wobei der elastische Körper (17) eine Feder, vorzugsweise eine Gasfeder, ist.

10. Fahrradabstellsystem nach einem der vorhergehenden Ansprüche, wobei das Gehäuse (5) einen feststehenden Abschnitt (11) aufweist, der über ein Gelenk (10) mit einem schwenkbaren Endabschnitt (9) verbunden ist, um den Tragarm (7) schwenkbar zu halten.

11. Fahrradabstellsystem nach Anspruch 9 und 10, wobei die Feder (17) an einem Ende schwenkbar verbunden mit dem schwenkbaren Endabschnitt (9) des Gehäuses (5) und an ihrem entgegengesetzten Ende schwenkbar verbunden mit dem feststehenden Abschnitt (11) des Gehäuses (5) ist, so dass sich, wenn der Halter (3) in der Ladeposition positioniert ist, die Befestigungspunkte der Feder (17) und der Drehpunkt des schwenkbaren Endabschnitts (9) in einer Linie miteinander befinden.

12. Fahrradabstellsystem nach einem der vorhergehenden Ansprüche, wobei der Halter (3) parallel zu dem Gehäuse (5) des Führungssystems (4) positioniert ist, wenn die Abstellposition vorliegt.

13. Fahrradabstellsystem nach einem der vorhergehenden Ansprüche, wobei der Halter (3) lateral zu dem Gehäuse (5) des Führungssystems (4) positioniert ist, wenn die Abstellposition vorliegt.

14. Fahrradabstellsystem nach Anspruch 13, wobei der Halter (3) tiefer als das Gehäuse (5) des Führungssystems (4) positioniert ist, wenn die Abstellposition vorliegt.

## Revendications

1. Un système de stockage de vélo à deux niveaux (1) pour le stockage de vélos à un premier niveau et à un second niveau au-dessus du premier niveau, comprenant :
- au moins un organe de maintien de premier niveau (2) pour maintenir un premier vélo, et pour stocker ledit vélo au premier niveau ;
- au moins un organe de maintien de second niveau (3) pour maintenir un second vélo, et pour stocker ledit vélo au second niveau ;
- un système de guidage (4), comprenant un logement (5) et au moins un guide (6), pour guider de façon supporté l'organe de maintien de second niveau (3) entre une position de stockage pour le stockage du vélo et une position de chargement pour charger et décharger le vélo sur, ou de, l'organe de maintien de second niveau (3) ; et
- un cadre (8) pour supporter le système de guidage (4) ;
**caractérisé en ce que**
le système de guidage (4) comprend en outre un bras de support (7) supporté de façon mobile dans le logement (5) par le guide (6), et connecté de façon supporté à l'organe de maintien de second niveau (3) de sorte que l'organe de maintien (3) est adjacent, au sens n'est pas compris dans, au logement (5) du système de guidage (4) lorsque dans la position de stockage.

2. Un système de stockage de vélo selon la revendication 1, dans lequel le logement (5) est au moins partiellement fermé le long de son côté supérieur pour protéger des parties du système de guidage (4) lorsque l'organe de maintien (3) est dans la position de chargement.

3. Un système de stockage de vélo selon la revendication 1 ou 2, dans lequel le logement (5) a un profil tubulaire avec une section transversale rectangulaire.

4. Un système de stockage de vélo selon l'une quelconque des revendications précédentes, dans lequel l'intérieur du logement (5) forme une surface de guidage pour guider le bras de support (7).

5. Un système de stockage de vélo selon la revendication 4, dans lequel le bras de support (7) est pourvu d'au moins deux roues de guidage (19) chacune suspendue à un côté latéral du bras de support (7), et dans lequel les axes de rotation des roues (19) ont un angle l'un par rapport à l'autre, de sorte que les roues (19) sont plus proches par leur côtés supérieurs qu'elles ne le sont pas leur côtés inférieurs.

6. Un système de stockage de vélo selon l'une quelconque des revendications précédentes, dans lequel le bras de support (7) est pivotable dans une position avec une extrémité abaissée pour supporter l'organe de maintien (3) dans la position de chargement.

7. Un système de stockage de vélo selon l'une quelconque des revendications précédentes, comprenant un corps flexible (17) pour équilibrer le poids de l'organe de maintien (3) dans la position de chargement.

8. Un système de stockage de vélo selon la revendication 7, dans lequel le corps flexible (17) est positionné à l'intérieur du logement (5) du système de guidage (4).

9. Un système de stockage selon la revendication 7 ou 8, dans lequel le corps flexible (17) est un ressort, de préférence un ressort à gaz.

10. Un système de stockage de vélo selon l'une quelconque des revendications précédentes, dans lequel le logement (5) comprend une section fixe (11) connectée via une articulation (10) à une section pivotable d'extrémité (9) pour supporter le bras de support (7) de façon pivotable.

11. Un système de stockage de vélo selon la revendication 9 ou 10, dans lequel le ressort (17) est à une extrémité connecté de façon pivotable à la section pivotable d'extrémité (9) du logement (5) et à son extrémité opposée est connecté de façon pivotable à la section fixe (11) du logement (5), de sorte que lorsque l'organe de maintien (3) est positionné dans la position de chargement, les points d'attache du ressort (17) et le point de pivot de la section d'extrémité pivotable (9) sont alignés.

12. Un système de stockage de vélo selon l'une quelconque des revendications précédentes, dans lequel l'organe de maintien (3) est positionné de façon parallèle au logement (5) du système de guidage (4) lorsque dans la position de stockage.

13. Un système de stockage de vélo selon l'une quelconque des revendications précédentes, dans lequel l'organe de maintien (3) est positionné de façon latérale au logement (5) du système de guidage (4) lorsque dans la position de stockage.

14. Un système de stockage de vélo selon la revendication 13, dans lequel l'organe de maintien (3) est positionné plus bas que le logement (5) du système de guidage (4) lorsque dans la position de stockage.
